# EUROPÄISCHE PATENTSCHRIFT

(11) **EP 2 358 563 B1**
(45) Veröffentlichungstag und Bekanntmachung des Hinweises auf die Patenterteilung: **16.10.2013**
(21) Anmeldenummer: 08875433.8
(22) Anmeldetag: 09.12.2008
(51) Int. Cl.: B65D 90/66, B65D 90/62, B60P 1/60, B60P 1/56, B60P 3/22

(54) **ABSPERRSYSTEM SOWIE AUSLAUFSYSTEM**
SHUTOFF SYSTEM AND DISCHARGE SYSTEM
SYSTÈME D'OBTURATION AINSI QUE SYSTÈME DE DÉCHARGE

(43) Veröffentlichungstag der Anmeldung: 24.08.2011
(73) Patentinhaber: HERMANNS Silo Gmbh, 51149 Köln-Porz-Gremberghoven (DE)
(72) Erfinder: HERMANNS, Karl, 51147 Köln-Porz-Grengel (DE); HEINRICHS, Waldemar, 40764 Langenfeld (DE)
(74) Vertreter: Lippert, Stachow & Partner
(86) Internationale Anmeldenummer: PCT/EP2008/067142
(87) Internationale Veröffentlichungsnummer: WO 2010/066291

(56) Entgegenhaltungen:
- EP-A- 0 292 031
- EP-A- 1 568 620
- DE-B3-102005 007 519
- DE-U1- 29 800 748

## Beschreibung

Die Erfindung betrifft ein Absperrsystem für die Entleerungsöffnung einer Auslaufschüssel eines Fahrzeugdrucksilos für rieselfähiges Schüttgut, umfassend ein Verschlusselement, eine Hubeinrichtung zum Antrieb des Verschlusselements, eine Trägereinrichtung für die Hubeinrichtung, und eine im montierten Zustand an der Peripherie der Entleerungsöffnung vorgesehene Dichtungsfläche, wobei die Hubeinrichtung im montierten Zustand innerhalb des Fahrzeugdrucksilos angeordnet ist und das Verschlusselement durch eine Vorhubbewegung in eine Absperrposition und durch eine Rückhubbewegung in eine Durchflussposition bewegbar ist, und wobei dem Verschlusselement eine Auflockerungsfläche zugeordnet ist, mit der während der Rückhubbewegung Schüttgut auflockerbar ist.

Ein Absperrsystem ist aus der EP 0 292 031 A1 bekannt, die anhand der Fig. 2-4 ein gattungsgemäßes Ausführungsbeispiel beschreibt. Die Funktion des Absperrsystems besteht darin, die am Boden einer Auslaufschüssel vorgesehene Entleerungsöffnung eines Silobehälters des Fahrzeugdrucksilos einerseits öffnen und andererseits verschließen zu können. Für die Entleerung des Schüttguts wird in dem Silobehälter ein Überdruck von beispielsweise 0,7 bar gegenüber dem Umgebungsdruck benötigt, der außerhalb des Silobehälters herrscht. Eine Undichtigkeit würde die Erzeugung des benötigten Überdrucks erschweren oder verhindern. Um den Überdruck aufbauen zu können, muss das Absperrsystem die Entleerungsöffnung luftdicht verschließen. Grundsätzlich könnte auch abseits des Absperrsystems, beispielsweise in einer nachgeschalteten Entleerungsleitung ein luftdicht verschließbares Ventil vorgesehen sein, um den Überdruck in dem Silobehälter zu ermöglichen.

Das gattungsgemäße Absperrsystem ist außerdem so gestaltet, dass die für die Absperrfunktion wesentlichen Teile innerhalb des Silobehälters angeordnet werden. Das Verschlusselement wird mittels einer Hubeinrichtung bewegt, die von Schüttgut umgeben ist.

Die innerhalb des Silobehälters angeordneten Teile des Absperrsystems stellen ein Strömungshindernis für das Schüttgut dar. Das Schüttgut strömt wegen höherer innerer Reibung schlechter als eine Flüssigkeit. Der Strömungsquerschnitt in der Auslaufschüssel wird durch die eingebauten Teile des Absperrsystems verringert. Daher wird angestrebt, dass Strömungshindernis beziehungsweise dessen Strömungswiderstand gering zu halten.

Im Betrieb ist das Verschlusselement dann, wenn es sich in der luftdicht schließenden Absperrposition befindet, von Schüttgut umgeben. Aufgrund der Gravitation bewegt sich das Schüttgut nach unten. Damit es sich zur Entleerungsöffnung bewegt, weist die Auslaufschüssel ein Gehäuse mit trichterförmig schräger Wand auf. Das Schüttgut kann auf diese Weise an der Gehäusewand herab zur Entleerungsöffnung rutschen.

Feines staub- oder puderförmiges Schüttgut kann sich auf dem Boden der Auslaufschüssel stark verdichten und festsetzen. Auch grobes Schüttgut, beispielsweise Pellets, wie Holzpellets, Reststoffpellets, Futtermittelpellets, etc. können sich verkanten - sogenannte Brückenbildung - und die Rieselfähigkeit beeinträchtigen. Das gattungsgemäße Absperrsystem lockert das Schüttgut jedoch auf. Dies geschieht während das Verschlusselement durch die Rückhubbewegung aus der Absperrposition heraus angehoben wird und die Entleerungsöffnung freigibt. Zu diesem Zweck ist dem Verschlusselement die erwähnte Auflockerungsfläche zugeordnet.

Ein wesentlicher Nachteil des bekannten Absperrsystems ist seine aufwändige Herstellung, Montage und komplizierte Wartung. Bei der Montage ist zu beachten, dass das Verschlusselement möglichst fluchtend auf die Entleerungsöffnung zu bewegt wird. Die Trägereinrichtung muss passgenau an der Innenseite im Bereich der Peripherie der Entleerungsöffnung angeschweißt werden. Die exakte Positionierung der Trägereinrichtung ist schwierig. Auch die Wartung ist schwierig, weil Personal in den Silobehälter hinein muss, beispielsweise um ein beschädigtes Verschlusselement oder eine verschlissene Dichtung auszutauschen. Der Raum der einer Person zur Bewegung im Inneren des Silobehälters zur Verfügung steht, ist begrenzt. Der Platzmangel erschwert jegliche Arbeiten an dem montierten Absperrsystem.

Außerdem ist aus der DE 10 2005 007 519 B3 bekannt, ein Absperrventil für rieselfähiges Schüttgut, mit einem Gehäuse, das eine Zuflussseite aufweist, mit der es an einen Silobehälter anschließbar ist und mit einem Dichtungsbereich an einer Auslaufseite des Gehäuses, sowie mit einem Verschlusselement, das eine Dichtung aufweist, die mit einer in dem Dichtungsbereich des Gehäuses vorgesehenen Dichtungsfläche zusammenwirkt, wobei das Verschlusselement in eine Absperrposition hinein und aus der Absperrposition hinaus bewegbar ist, wobei ein Abschirmungselement vorgesehen ist, und wobei zumindest die Dichtung des Verschlusselements von dem Abschirmungselement wenigstens teilweise gegen fließendes Schüttgut abgeschirmt ist.

Der Erfindung liegt die Aufgabe zugrunde, das gattungsgemäße Absperrsystem so weiterzubilden, dass es einfacher hergestellt, montiert und gewartet werden kann.

Erfindungsgemäß wird die Aufgabe dadurch gelöst, dass die Trägereinrichtung, die Hubeinrichtung und das Verschlusselement zu einem vorgefertigten Absperrmodul zusammengebaut sind, dass das vorgefertigte Absperrmodul einen Montagesockel aufweist, dass der Montagesockel mit einem Aufnahmebereich für ein Kopplungselement versehen ist, und dass der Montagesockel passend zu einem an der Peripherie der Entleerungsöffnung vorgesehenen Anschlussbereich der Auslaufschüssel gestaltet ist. Vorteilhaft sieht das Absperrsystem eine einfach lösbare Verbindung zwischen dem Absperrmodul und dem an der Peripherie der Entleerungsöffnung vorgesehenen Anschlussbereich der Auslaufschüssel vor. Dadurch kann das Absperrmodul sehr einfach montiert beziehungsweise für Wartungsarbeiten demontiert werden. Arbeiten an Bauteilen des Absperrmoduls lassen sich außerhalb des Silobehälters einfacher ausführen, weil der innerhalb des Silobehälters auftretende Platzmangel wegfällt. Der Zeitaufwand für Wartungsarbeiten ist insgesamt geringer, wenn das Absperrmodul außerhalb des Silobehälters gewartet werden kann und beispielsweise ein instandgesetztes Absperrmodul als Austauschmodul eingebaut werden kann.

Die Hubeinrichtung ist günstigerweise ein standardisiertes Maschinenelement, beispielsweise ein Fluidzylinder mit Kolben und Kolbenstange oder ein elektrischer Antrieb mit Motor und Getriebe oder ein anderer geeigneter Antrieb. Mit der Hubeinrichtung wird das Verschlusselement translatorisch bewegt.

Vorzugsweise umfasst das Absperrmodul die Dichtungsfläche, die im montierten Zustand an der Peripherie der Entleerungsöffnung vorgesehen ist. Das Verschlusselement ist relativ zur Dichtungsfläche bewegbar. Wenn es sich in der Absperrposition befindet, liegt das Verschlusselement an der Dichtungsfläche an und schließt luftdicht ab. Im montierten Zustand des Absperrsystems ist dann die Entleerungsöffnung der Auslaufschüssel beziehungsweise des Silobehälters luftdicht verschlossen.

Das Absperrmodul mit der integrierten Dichtungsfläche bildet eine relativ kleine Baueinheit, die sich außerhalb eines Silobehälters leicht zusammenbauen und einstellen lässt. Bereits während der Montage der einzelnen Bauteile des Absperrmoduls können diese so zusammengefügt beziehungsweise aufeinander eingestellt werden, dass das Verschlusselement luftdicht schließen kann, wenn es aus einer Durchflussposition in die Absperrposition bewegt wird.

Das vormontierte Absperrsystem kann sehr einfach an einem Anschlussbereich der Auslaufschüssel beziehungsweise an einem Silobehälter angebracht werden. Einfache Dichtungen genügen, um diese Fügestelle luftdicht auszuführen. Komplizierte Einstellund Positionierungsarbeiten, um die Luftdichtheit zu gewährleisten sind nicht mehr erforderlich. Durch die Vormontage und Vorjustierung der Bauteile des Absperrmoduls ist gewährleistet, dass die Bewegungsbahn des Verschlusselements fluchtend zur Dichtungsfläche angeordnet ist und das Verschlusselement in der Absperrposition luftdicht schließt.

Die integrierte Dichtungsfläche kann beispielsweise an dem Montagesockel angeordnet sein.

Zweckmäßig weist die Hubeinrichtung einen Fluidzylinder auf, der von einem Arbeitsmedium betätigbar ist. Es kommt ein von einem flüssigen Medium angetriebener Hydraulikzylinder oder ein Pneumatikzylinder zum Einsatz, in dem vorzugsweise Luft als Arbeitsmedium vorgesehen ist.

Eine Alternative Ausführungsform sieht eine Hubeinrichtung mit einem elektrischen Antrieb vor, der einen Motor und ein Getriebe aufweist. Auch mit der elektrischen Hubeinrichtung wird eine Vorhubbewegung und eine Rückhubbewegung erzeugt, um das Verschlusselement zu bewegen. Der Motor kann ein Servomotor und das Getriebe eine Drehbewegung des Motors in eine geradlinige Bewegung zum Antrieb des Verschlusselements umwandeln.

Jedwede Hubeinrichtung kann mit einem Mantelelement umgeben sein, das einen Kontakt der Hubeinrichtung mit dem Schüttgut vermeidet. Das Mantelelement kann so gestaltet sein, dass auch Energieleitungen und Anschlüsse darunter passen. Das Schüttgut kommt dadurch nur mit der Oberfläche des Mantelelements in Kontakt. Das Mantelelement kann überdies strömungsgünstig für das Schüttgut geformt sein und den Strömungswiderstand günstig beeinflussen.

Ein weiterer Nutzen ergibt sich, wenn wenigstens eine Energieleitung vorgesehen ist, mit der der Hubeinrichtung Energie zuführbar ist, und die Energieleitung sich zumindest innerhalb der Trägereinrichtung erstreckt. Dadurch kann darauf verzichtet werden, innerhalb des Silobehälters und außerhalb des Absperrsystems eine Energieleitung einbauen zu müssen. Die integrierte Energieleitung vereinfacht die Montage des Absperrsystems. Zusammen mit dem Mantelelement kann das Absperrsystem so gestaltet sein, dass sich im Behältervolumen des Silobehälters und außerhalb des Absperrsystems keine Energieleitungen befinden. Dies ist unter anderem günstig für Lebensmittel, wie Mehl, etc. Die für Lebensmittel erforderliche Hygiene des Silobehälters kann einfacher gewährleistet werden, wenn keine Nischen und Lücken vorhanden sind, in denen sich verderbliches Lebensmittel ablagern kann.

Die Energieleitung kann ein außenliegend angeordnetes Anschlusselement für eine Versorgungsleitung aufweisen. Außen liegend bedeutet in diesem Zusammenhang, dass Anschlusselement befindet sich im montierten Zustand des Absperrsystems an der dem Schüttgut abgewandten Außenseite des Silobehälters beziehungsweise der Auslaufschüssel. Dabei ist das Anschlusselement vorzugsweise außen liegend an dem Absperrsystems selbst angeordnet und für die Montage und Wartungszwecke jederzeit zugänglich.

Die Energieleitung ist beispielsweise als Strömungskanal ausgebildet, wenn die Hubeinrichtung mit einem flüssigen oder gasförmigen Arbeitsmedium betrieben wird.

Die Handhabung des Absperrsystems vereinfacht sich weiterhin, wenn ein Auslauftopf vorgesehen ist. Der Auslauftopf bietet wenigstens eine Anschlussöffnung für eine Entleerungsleitung. Falls mehrere Absperrsysteme in Reihe angeordnet werden sollen, kann der Auslauftopf einen Durchgang für die Entleerungsleitung bilden. Dadurch kann Schüttgut einerseits aus dem Silobehälter direkt durch das Absperrsystem in dessen Auslauftopf strömen und außerdem kann Schüttgut, das durch ein benachbartes Absperrsystem strömt, den Auslauftopf passieren.

Überdies kann die Handhabung des Auslauftopfs vereinfacht werden, wenn dieser einstückig mit der Trägereinrichtung ausgebildet ist. Der Auslauf kann dann Teil des Absperrmoduls sein.

Der Auslauftopf ist durch die Anbringung des Absperrsystems an der Peripherie der Entleerungsöffnung gleichzeitig lagerichtig montiert und eine Fügestelle fällt weg. Die Montage wird vereinfacht.

Um die Dichtigkeit zu verbessern ist das Verschlusselement mit einer Dichtung versehen. Die Dichtung wirkt mit einer Dichtungsfläche zusammen, die an der Peripherie der Entleerungsöffnung vorgesehen ist. Wenn das Verschlusselement durch eine Vorhubbewegung der Hubeinrichtung in die Absperrposition gelangt, liegt die Dichtung luftdicht an der Dichtungsfläche an und verschließt die Entleerungsöffnung. Um die Entleerungsöffnung freizugeben, führt die Hubeinrichtung die Rückhubbewegung aus, mit der das Verschlusselement von der Dichtungsfläche weg bewegt wird.

Wie oben erwähnt, kann grundsätzlich auch an anderer Stelle ein Ventil vorgesehen sein, um Überdruck im Silobehälter zu ermöglichen. Das Ventil könnte beispielsweise in einer Entleerungsleitung angeordnet sein, die der Auslaufschüssel nachgeschaltetet ist. Für die Anordnung einer Dichtung ist jedoch der Bereich der Auslaufschüssel günstiger als die Entleerungsleitung. In der Entleerungsleitung fließt üblicherweise zwecks Transport des Schüttguts ein Luftstrom mit hoher Strömungsgeschwindigkeit. Durch eine hohe Strömungsgeschwindigkeit wirkt das Schüttgut stark abrasiv. Im Unterschied dazu bewegt sich das Schüttgut innerhalb der Auslaufschüssel langsamer als in der nachgeschalteten Entleerungsleitung. In der Auslaufschüssel sind daher ein geringerer Abrieb und eine erhöhte Lebensdauer der Dichtung zu beobachten.

Um den Schutz der Dichtung weiter zu verbessern, kann ein bewegliches Abschirmungselement vorgesehen sein, mit dem die Dichtung in geöffnetem Zustand des Verschlusselements wenigstens teilweise gegen fließendes Schüttgut abschirmbar ist. Ein entsprechendes Abschirmungselement ist in der DE 10 2005 007 519 B3 beschrieben und dargestellt. Das bekannte Abschirmungselement ist hiermit in die vorliegende Offenbarung einbezogen.

Die Maßnahme, ein Abschirmungselement vorzusehen, reduziert den Kontakt der Dichtung mit dem abrasiv wirkenden Schüttgut und erhöht deren Lebensdauer.

Zur Lösung der zugrundeliegenden Aufgabe wird weiterhin ein Auslaufsystem für rieselfähiges Schüttgut vorgeschlagen, das eines der oben vorgeschlagenen Absperrsysteme sowie eine Auslaufschüssel mit einer Entleerungsöffnung umfasst. Die Auslaufschüssel ist an einem Silobehälter anbringbar. Der Silobehälter weist eine dafür vorgesehene Ausnehmung in der Behälterwand auf.

Eine Weiterbildung des Auslaufsystems sieht vor, dass an der Peripherie der Entleerungsöffnung der Auslaufschüssel ein Anschlussbereich für das Absperrsystem angeordnet ist. Der Anschlussbereich dient insbesondere dazu, das Absperrsystem schnell und einfach aus der Auslaufschüssel zu entfernen. Dadurch können Wartungsarbeiten außerhalb des Silobehälters durchgeführt werden. Anschließend lässt sich das instandgesetzte Absperrsystem rasch montieren und ist innerhalb kurzer Zeit wieder betriebsbereit.

Die Auslaufschüssel kann zwecks Befestigung an einem Silobehälter eines Fahrzeugdrucksilos mit einem Anschlussflansch versehen sein. Zweckmäßig ist der Silobehälter mit einem Trägerflansch versehen, der zu dem Anschlussflansch der Auslaufschüssel passend ist. Auf diese Weise kann die Auslaufschüssel leicht lösbar an dem Silobehälter befestigt werden. Zur Befestigung des Anschlussflanschs an dem Trägerflansch können beispielsweise Schraubenverbindungen vorgesehen sein. Selbstverständlich kann alternativ auf einen Anschlussflansch an der Auslaufschüssel verzichtet und diese beispielsweise stoffschlüssig an dem Rand der Ausnehmung der Behälterwand mit dem Silobehälter verbunden werden. Hierfür eignet sich unter anderem eine Schweißverbindung.

Weiterhin kann wenigstens ein Kopplungselement vorgesehen sein, das zur lösbaren Verbindung des Absperrsystems an der Auslaufschüssel dient. Mit dem Kopplungselement kann das Absperrsystem kraft- und/oder formschlüssig mit der Auslaufschüssel verbunden sein. Als Kopplungselement kann eine Schraubverbindung dienen, die ein Bolzengewinde sowie ein Muttergewinde vorsieht. Das Muttergewinde ist vorzugsweise in ein Bauteil des Absperrsystems beziehungsweise der Auslaufschüssel integriert oder es ist beispielsweise eine separate Gewindemutter vorgesehen.

Die Handhabung des Kopplungselements kann überdies vereinfacht werden, wenn dieses ein Mittel aufweist, mit dem in Umfangsrichtung eine Spannkraft erzeugbar ist.

Der Anschlussbereich der Auslaufschüssel und der Montagesockel des Absperrsystems werden miteinander in Kontakt gebracht, wobei die Spannkraft des Kopplungselements sowohl in den Anschlussbereich der Auslaufschüssel als auch in den Montagesockel des Absperrsystems übertragen wird. Zu diesem Zweck ist das Kopplungselement beispielsweise mit Schalensegmenten versehen, die den Montagesockel und den Anschlussbereich umfassen. Die Schalensegmente können kraft- und/oder formschlüssig mit dem Montagesockel und dem Anschlussbereich der Auslaufschüssel zusammenwirken.

Nachstehend sind mehrere Ausführungsbeispiele der Erfindung anhand einzelner Figuren detailliert beschrieben. Es zeigen:
- Fig. 1: ein Absperrsystem sowie eine Auslaufschüssel eines Silobehälters und einen Auslauftopf,
- Fig. 2: ein Absperrsystem mit integriertem Auslauftopf sowie eine Auslaufschüssel für einen Silobehälter,
- Fig. 3a: ein alternatives Absperrsystem mit integriertem Auslauftopf sowie eine Auslaufschüssel für einen Silobehälter,
- Fig. 3b: das Absperrsystem gemäß Fig. 3a im montierten Zustand an der Auslaufschüssel,
- Fig. 3c: ein Kopplungselement zur Herstellung einer lösbaren Verbindung zwischen dem Absperrsystem und einem dafür vorgesehenen Anschlussbereich an der Peripherie der Entleerungsöffnung der Auslaufschüssel,
- Fig. 4: ein alternatives Absperrsystem sowie eine Auslaufschüssel mit daran angeordnetem Auslauftopf,
- Fig. 5: ein Absperrsystem gemäß Fig. 4 mit einer alternativen Befestigung sowie eine Auslaufschüssel mit daran angeordnetem Auslauftopf,
- Fig. 6: ein alternatives Absperrsystem sowie eine Auslaufschüssel mit einer daran angeordneten Dichtungsfläche für das Verschlusselement des Absperrsystems sowie mit einem an der Auslaufschüssel angeordneten Auslauftopf.

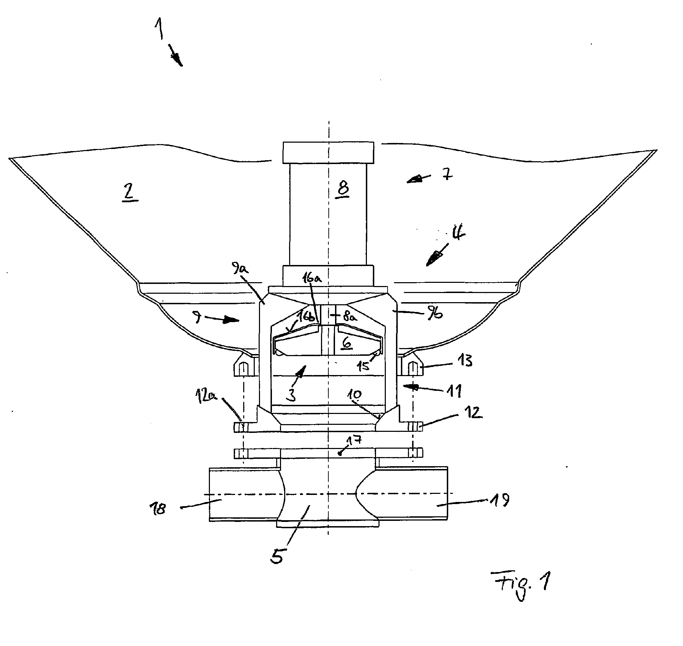

Fig. 1 zeigt drei Baugruppen eines Auslaufsystems 1 für rieselfähiges Schüttgut. Das Auslaufsystem 1 umfasst als erstes eine Auslaufschüssel 2 mit einer Entleerungsöffnung 3, als zweites ein Absperrsystem 4 sowie als drittes einen Auslauftopf 5. Diese drei Baugruppen werden vorzugsweise durch Verbindungselemente, wie beispielsweise Schrauben (nicht dargestellt), zu einem betriebsfähigen Auslaufsystem 1 mit luftdichten Fügestellen montiert. Das Auslaufsystem 1 ist für ein Fahrzeugdrucksilo vorgesehen, bei dem für die Entleerung des Schüttguts ein Überdruck gegenüber dem außerhalb des Silobehälters herrschenden Umgebungsdruck benötigt wird.

Den Kern des Auslaufsystems 1 bildet die in der Mitte angeordnete Baugruppe, nämlich das Absperrsystem 4. Dieses kann als eine komplett montierte und funktionsfähig eingestellte Baugruppe ausgebildet sein. Das Absperrsystem 4 kann daher auch als Austauschteil gehandelt werden.

Das Absperrsystem 4 gemäß Fig. 1 umfasst ein tellerförmiges Verschlusselement 6, eine Hubeinrichtung 7 zum Antrieb des Verschlusselements 6. Dabei weist die Hubeinrichtung 7 einen Pneumatikzylinder 8 mit einer Kolbenstange 8a auf, an der das Verschlusselement 6 angebracht ist. Es ist eine Trägereinrichtung 9 vorgesehen, an welcher der Pneumatikzylinder 8 befestigt ist. Außerdem ist eine mit dem Verschlusselement 6 zusammenwirkende Dichtungsfläche 10 vorgesehen.

Die Trägereinrichtung 9, die Hubeinrichtung 7 und das Verschlusselement 6 sind zu einem vorgefertigten Absperrmodul 11 zusammenmontiert. Das Absperrmodul 11 umfasst die wesentlichen Bauteile, welche für die Absperrfunktion erforderlich sind. Es weist einen Montagesockel 12 auf, der passend zu einem an der Peripherie der Entleerungsöffnung 3 der Auslaufschüssel 2 vorgesehenen Anschlussbereich 13 gestaltet ist. Der Montagesockel 12 ist außerdem mit mehreren als Bohrung gestalteten Aufnahmebereichen 12a für Kopplungselemente in Form von Schrauben (nicht dargestellt) versehen.

Die Trägereinrichtung 9 ist an dem Montagesockel 12 angeordnet. Sie weist drei Stützen auf, die versetzt zueinander angeordnet und mit dem Montagesockel 12 verbunden sind. In den Darstellungen sind von den drei Stützen jeweils die beiden Stützen 9a und 9b gezeigt.

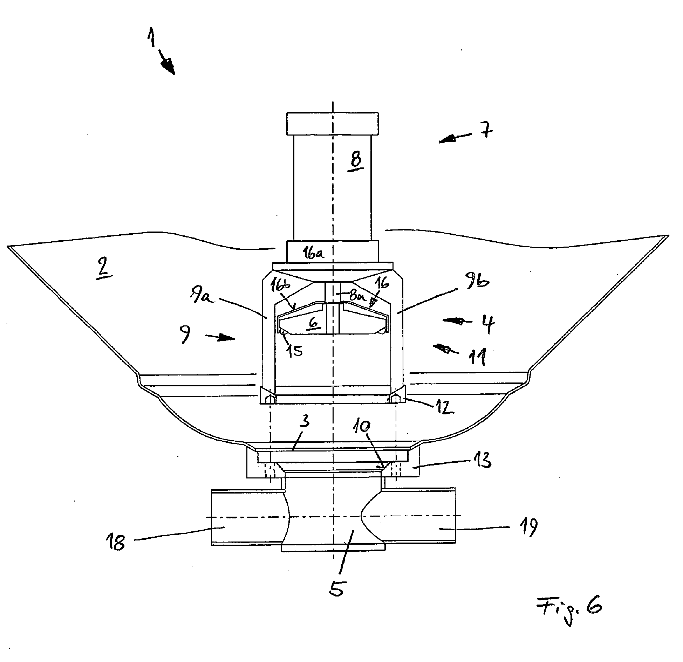

Auch die Dichtungsfläche 10 kann an dem Absperrmodul 11 angeordnet sein. Bei dem Ausführungsbeispiel gemäß Fig. 1 ist die Dichtungsfläche 10 an dem Montagesockel 12 angeordnet, der zum Absperrmodul 11 gehört. Eine Alternative, bei der die Dichtungsfläche 10 nicht an dem Absperrmodul 11 vorgesehen ist, wird später anhand von Fig. 6 erläutert. Die Dichtungsfläche 10 ist im vorliegenden Ausführungsbeispiel trichterförmig gestaltet. Sie weist die Geometrie der Innenfläche eines Kegelstumpfs auf.

Das Verschlusselement 6 ist mit einer Dichtung 15 versehen. Wenn das Verschlusselement 6 durch eine Vorhubbewegung des Pneumatikzylinders 8 bewegt wird, erreicht es eine sogenannte Absperrposition, in der es mit der Dichtungsfläche 10 in Kontakt ist. In der Absperrposition dichtet das Verschlusselement 6 die Entleerungsöffnung 3 der Auslaufschüssel 2 luftdicht ab, damit der erwähnte Überdruck erzeugt werden kann.

Durch eine Rückhubbewegung des Pneumatikzylinders 8 ist das Verschlusselement 6 in eine Durchflussposition bewegbar. In dieser ist die Entleerungsöffnung 3 der Auslaufschüssel 2 freigegeben und Schüttgut kann aus dem Silobehälter ausströmen.

Das Absperrmodul 11 weist außerdem zum Schutz der Dichtung 15 des Verschlusselements 6 ein bewegliches Abschirmungselement 16 auf. Wenn das Verschlusselement 6 seine Durchflussposition einnimmt und Schüttgut aus der Auslaufschüssel 2 strömt, schirmt das Abschirmungselement 16 die Dichtung 15 gegenüber strömendem Schüttgut ab. Das Abschirmungselement 16 ist mit einer Bohrung 16a auf der Kolbenstange 8a des Pneumatikzylinders 8 angeordnet, so dass sich ein Schiebesitz ergibt. Das Abschirmungselement 16 ist außerdem mit einer Auflockerungsfläche 16b versehen, mit der Schüttgut angehoben wird, wenn das Verschlusselement 6 durch die Rückhubbewegung des Pneumatikzylinders 8 bewegt und das Abschirmungselement 16 von dem Verschlusselement 6 mitgenommen wird. Selbstverständlich kann bei allen Ausführungsbeispielen das Absperrmodul 11 auch ohne ein derartiges Abschirmungselement 16 ausgeführt sein. Eine Auflockerungsfläche wäre bei einem Ausführungsbeispiel ohne Abschirmungselement 16 beispielsweise an dem Verschlusselement 6 angeordnet, um die Funktion der Auflockerung zu gewährleisten.

Da nach der vorgeschlagenen Konstruktion des Absperrsystems 4 die Hubeinrichtung 7 innerhalb des Fahrzeugdrucksilos angeordnet wird, beeinträchtigt die Hubeinrichtung 7 die Querschnittsgröße der Auslaufschüssel 2. Bevorzugt ist der Querschnitt der Hubeinrichtung 7 kleiner als der Querschnitt des Verschlusselements 6.

Der Auslauftopf 5 weist gemäß Fig. 1 eine erste Öffnung 17 auf, durch die Schüttgut aus der Auslaufschüssel 2 in den Auslauftopf 5 strömt und von dort in eine Entleerungsleitung (nicht dargestellt) gelangen kann. Da mehrere Auslaufsysteme 1 vorgesehen sein können, weist der Auslauftopf 5 außerdem eine zweite quer zu der ersten angeordnete Öffnung 18 auf, durch die Schüttgut von einem benachbarten Auslaufsystem zuströmen kann und schließlich ist eine dritte Öffnung 19 vorgesehen, durch die das gesamte Schüttgut aus dem Auslauftopf 2 in die Entleerungsleitung abströmen kann. Das von einem benachbarten Auslaufsystem kommende Schüttgut wird somit durch eine gemeinsame Entleerungsleitung geführt und passiert auf diesem Weg den Auslauftopf 5. Sind mehrere Auslaufsysteme 1 in Reihe angeordnet, ist jeweils zwischen zwei Auslaufsystemen 1 ein Leitungsstück der Entleerungsleitung vorgesehen. Die Auslauftöpfe 5 sind somit in Reihe mit Leitungsstücken der Entleerungsleitung angeordnet.

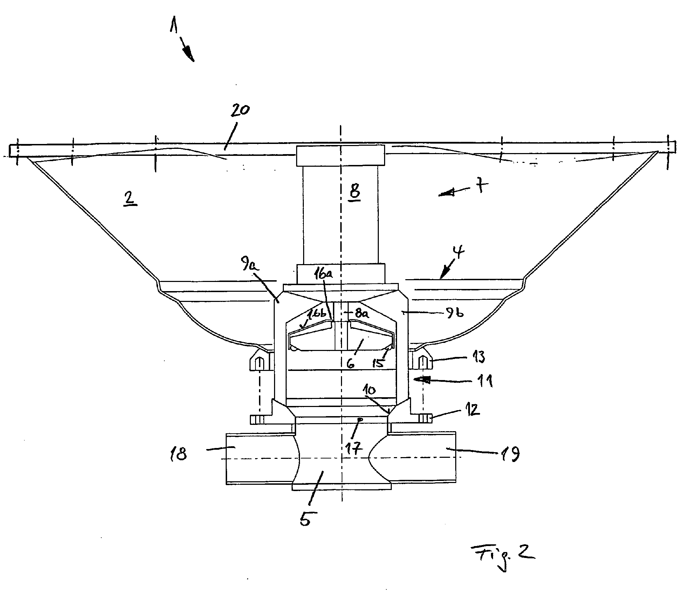

Fig. 2 zeigt ein Auslaufsystem 1, dessen Auslaufschüssel 2 im Unterschied zu der Auslaufschüssel 2 nach Fig. 1 einen Anschlussflansch 20 aufweist, mit der sie an einem Silobehälter anbringbar ist. Der Silobehälter muss zu diesem Zweck mit einem passenden Trägerflansch versehen sein, so dass die Auslaufschüssel 2 an diesem Trägerflansch lösbar befestigt werden kann. Das Absperrsystem 1 ist weitgehend identisch mit dem Absperrsystem 4 gemäß Fig. 1. Es unterscheidet sich lediglich dadurch, dass das Absperrmodul 11 und der Auslauftopf 5 zusammengefasst sind. Der Auslauftopf 5 ist mit dem Montagesockel 12 und der Trägereinrichtung 9 einstückig ausgebildet. Gleiche Bauteile sind in Fig. 2 mit denselben Bezugszeichen versehen, wie in Fig. 1. Das gleiche gilt auch für die übrigen Figuren. Der in Fig. 2 dargestellte Anschlussflansch 20 der Auslaufschüssel 2 kann selbstverständlich auch bei den übrigen Ausführungsbeispielen vorgesehen sein.

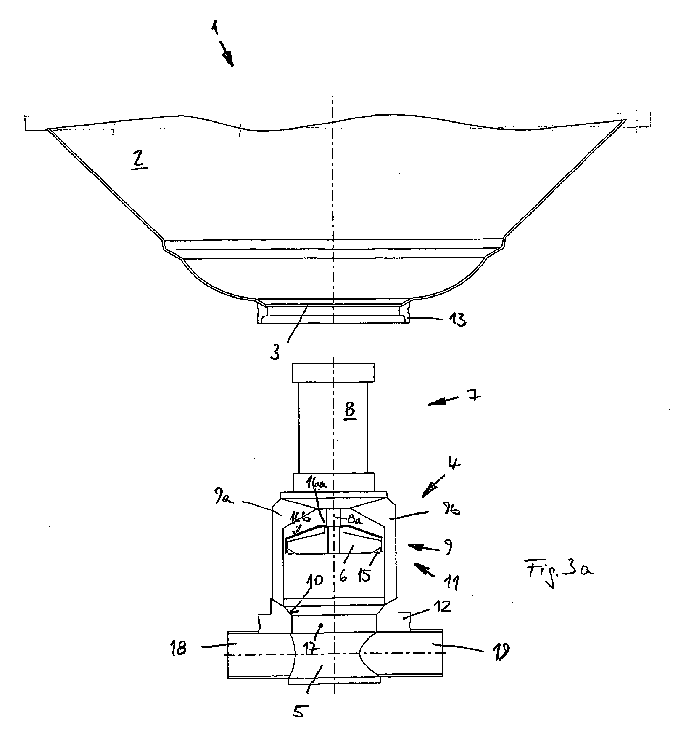

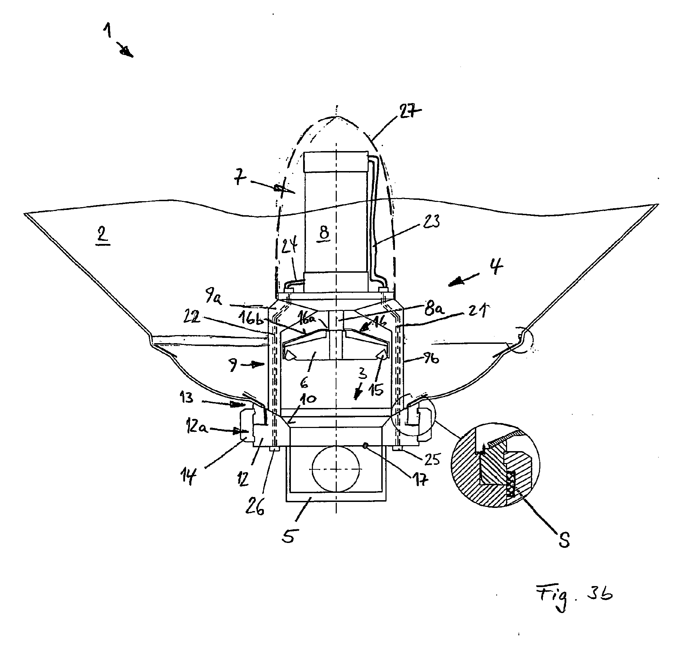

Fig. 3a zeigt ein weiteres Ausführungsbeispiel, dessen Absperrsystem 4 einen integrierten Auslauftopf 5 aufweist, der mit dem Montagesockel 12 und der Trägereinrichtung 9 integriert ist. Außerdem ist in Fig. 3a erkennbar die Auslaufschüssel 2 mit einem besonders gestalteten Anschlussbereich 13 an der Peripherie der Entleerungsöffnung 3 versehen. Das Absperrmodul 11 ist noch nicht in die Entleerungsöffnung eingefügt worden. Der Montagesockel 12 des Absperrmoduls 11 ist passend zu dem Anschlussbereich 13 der Auslaufschüssel 2 gestaltet. Der Anschlussbereich 13 sowie der Montagesockel 12 sind so gestaltet, dass ein besonderes Kopplungselement angebracht werden kann, das eine Verbindung zwischen Anschlussbereich 13 und Montagesockel 12 herstellt. Die Fügestelle wird luftdicht ausgeführt. Sie könnte beispielsweise mittels einer Dichtung zwischen Montagesockel 12 und Anschlussbereich 13 versehen sein. Vorliegend ist jedoch eine andere Konstruktion gewählt, die anhand von Fig. 3b erläutert ist.

Der durch das Kopplungselement fixierte zusammengebaute Zustand ist in Fig. 3b dargestellt. Hier ist zunächst das Absperrsystem 4 von außen in die Entleerungsöffnung 3 der Auslaufschüssel 2 hinein gesteckt worden. Dabei wurde der Montagesockel 12 des Absperrsystems 4 mit dem Anschlussbereich 13 der Auslaufschüssel 2 in Kontakt gebracht. Anschließend ist das Kopplungselement 14 angebracht worden. Bei dem Kopplungselement 14 handelt es sich um ein Kopplungselement 14 mit Schalensegmenten und Spannelementen. Der Montagesockel 12 und der Anschlussbereich 13 sind, wie die Enden zweier Rohre gegeneinander gestoßen. Das Kopplungselement 14 überlappt die Stoßfuge und erzeugt eine Spannkraft, welche in die gestoßenen Bauteile übertragen wird, nämlich Montagesockel 12 und Anschlussbereich 13 der Auslaufschüssel 2. Anstelle einer Dichtung zwischen Montagesockel 12 und Anschlussbereich 13 ist hier eine Dichtung S an dem Kopplungselement 14 vorgesehen. Die Dichtung S ist so angeordnet, dass sie die Stoßfuge von Montagesockel 12 und Anschlussbereich 13 umfängt und überlappt. Die Dichtung S wird von den Schalensegmenten gegen die Stoßfuge gequetscht und schließt luftdicht ab.

Gemäß dem vorliegenden Ausführungsbeispiel wirkt das Kopplungselement 14 nicht nur kraftschlüssig sondern auch formschlüssig. Es weist hierfür eine Geometrie auf, die mit dem Anschlussbereich 13 der Auslaufschüssel 2 eine hinterschnittene Verbindung bildet. Der Montagesockel 12 weist einen Aufnahmebereich 12a auf, der ebenfalls mit dem Kopplungselement 14 eine hinterschnittene Verbindung bildet. Im montierten Zustand verhindern diese Hinterschneidungen ein Auseinanderbewegen von Absperrsystem 4 und Auslaufschüssel 2 in axialer Richtung.

Die Stützen 9a und 9b der Trägereinrichtung 9 weisen je eine Energieleitung auf. Es handelt sich um Strömungskanäle für das Arbeitsmedium des Pneumatikzylinders 8 der Hubeinrichtung 7. Im Ausführungsbeispiel der Fig. 3b ist eine Stütze 9a mit einem Strömungskanal 21 versehen und in der Stütze 9b ist ein Strömungskanal 22 integriert.

Der Pneumatikzylinder 8 ist ein doppeltwirkender Zylinder mit zwei variablen Arbeitsräumen, zwischen denen ein Kolben 8b mit der einseitig angebrachten Kolbenstange 8a angeordnet ist. Einer der Arbeitsräume bewirkt die Vorhubbewegung und ist zu diesem Zweck über ein Leitungsstück 23 mit dem Strömungskanal 21 verbunden. Der andere Arbeitsraum bewirkt die Rückhubbewegung und ist zu diesem Zweck über ein Leitungsstück 24 mit dem Strömungskanal 22 verbunden.

Eine alternative Konstruktion könnte so gestaltet sein, dass mehrere Strömungskanäle in einer einzigen Stütze integriert sind.

Nach Fig. 3b durchdringt der Strömungskanal 21 für die Vorhubbewegung auch den Montagesockel 12. Außen an dem Montagesockel 12 ist ein Anschlusselement 25 vorgesehen, an dem eine Versorgungsleitung (nicht dargestellt) anbringbar ist. Der Strömungskanal 22 für die Rückhubbewegung durchdringt ebenfalls den Montagesockel 12 und außen am Montagesockel 12 ist ein zweites Anschlusselement 26 für eine Versorgungsleitung (nicht dargestellt) vorgesehen. Optional kann bei allen Ausführungsbeispielen die Hubeinrichtung 7 mit einem Mantelelement abgedeckt sein, wie dem beispielhaft in Fig. 3b gestrichelt dargestellten Mantelelement 27. Das Mantelelement 27 vermeidet einen Kontakt der Hubeinrichtung 7 mit dem Schüttgut. Das Mantelelement 27 ist so gestaltet, dass die Leitungsstücke 23 und 24 ebenfalls darunter passen. Das Schüttgut kommt dadurch nur mit der Oberfläche des Mantelelements 27 in Kontakt, nicht aber mit dem Pneumatikzylinder 8 und den Leitungsstücken 23 beziehungsweise 24. Das Mantelelement 27 weist eine Form auf, welche die Hubeinrichtung 7 einhüllt. Durch die Formgebung kann für das Schüttgut eine strömungsgünstige Gestalt des Mantelelements 27 erreicht und dessen Strömungswiderstand günstig beeinflusst werden.

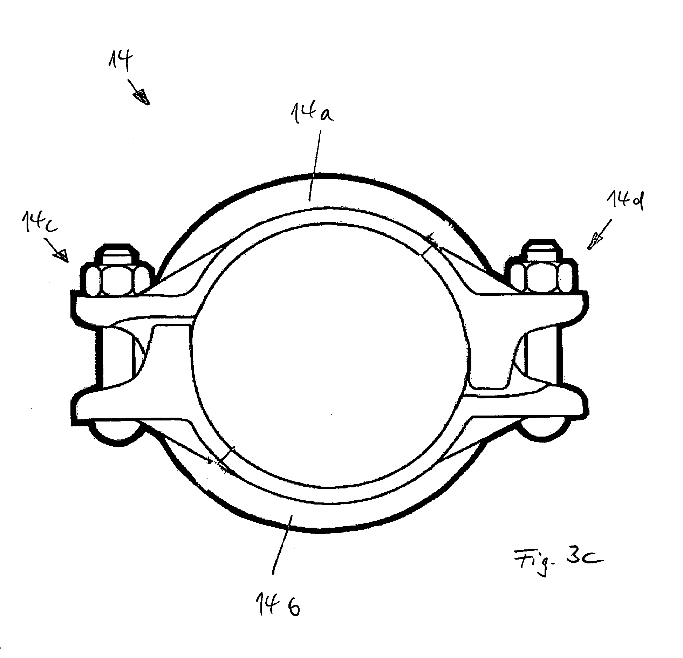

Ein Beispiel für ein Kopplungselement 14 mit Schalensegmenten ist in Fig. 3c dargestellt. In diesem Beispiel weist das Kopplungselement 14 zwei Schalensegmente 14a und 14b auf, die über Schraubenverbindungen 14c und 14d eine Spannkraft in Unfangsrichtung erzeugen können und auf diese Weise den Montagesockel 12 des Absperrmoduls 11 und den Anschlussbereich 13 der Auslaufschüssel 2 miteinander verbinden.

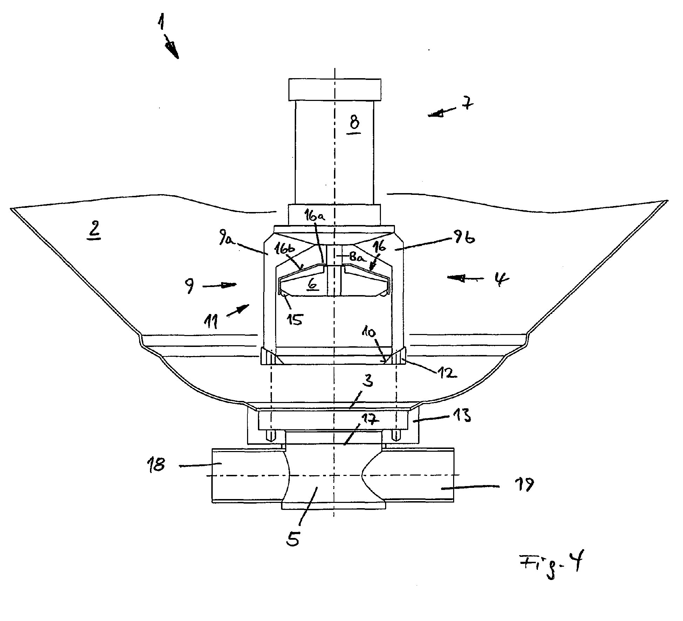

Fig. 4 zeigt ein alternatives Auslaufsystem 1 mit einer Auslaufschüssel 2, die an der Peripherie der Entleerungsöffnung 3 einen Anschlussbereich 13 für ein Absperrsystem 4 aufweist. Das Absperrsystem 4 unterscheidet sich von den zuvor beschriebenen Absperrsystemen 4, weil es dazu ausgelegt ist, an der Innenseite der Auslaufschüssel 2 angebracht zu werden. Demzufolge ist der Anschlussbereich 13 passend ausgebildet, so dass der Montagesockel 12 des Absperrsystems 4 von der Innenseite der Auslaufschüssel 2 in diesen Anschlussbereich 13 hineinpasst. Beim Ausführungsbeispiel gemäß Fig. 4 erfolgt die Verbindung des Absperrsystems 4 ebenfalls von der Innenseite der Auslaufschüssel 2. Zur Verbindung werden Schrauben verwendet (nicht dargestellt). Der Auslauftopf 5 des Ausführungsbeispiels gemäß Fig. 4 ist an dem Anschlussbereich 13 der Auslaufschüssel 2 integriert.

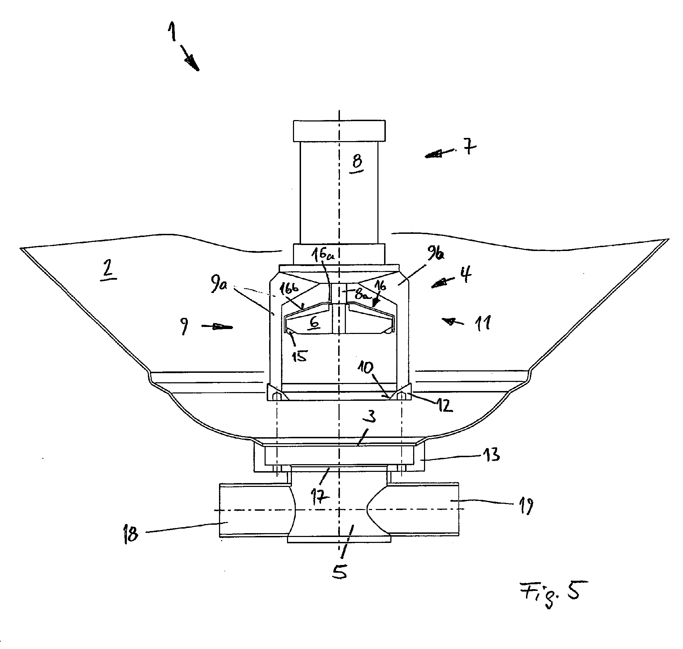

In Fig. 5 ist ein Auslaufsystem 1 dargestellt, das weitgehend mit dem Ausführungsbeispiel der Fig. 4 identisch ist. Es unterscheidet sich von dem Ausführungsbeispiel gemäß Fig. 4 nur dadurch, dass die zur Verbindung des Absperrsystems 4 mit der Auslaufschüssel 2 erforderlichen Schrauben von der Außenseite der Auslaufschüssel 2 montiert werden.

Ein alternatives Auslaufsystem ist in Fig. 6 gezeigt. Dieses weist ein Absperrsystem 4 auf, das wie das Absperrsystem 4 gemäß Fig. 5 an der Innenseite der Auslaufschüssel 2 angefügt und mit dem an der Peripherie der Entleerungsöffnung 3 angeordneten Anschlussbereich 13 verbunden wird. Die Verbindung erfolgt wiederum mittels Schrauben, die von der Außenseite der Auslaufschüssel 2 her montiert werden. Die Besonderheit des Auslaufsystems 1 gemäß Fig. 6 besteht darin, dass die Dichtungsfläche 10, die mit dem Verschlusselement 6 zusammenwirkt an dem Anschlussbereich 13 der Auslaufschüssel 2 angeordnete ist. Das Absperrmodul 11 hingegen weist keine Dichtungsfläche auf. Bei diesem Ausführungsbeispiel muss besonderer Wert gelegt werden auf die passgenaue Montage, damit das Verschlusselement 6 dann, wenn das Absperrmodul 11 mit der Auslaufschüssel 2 verbunden ist, koaxial zur Dichtungsfläche 10 angeordnet ist und luftdicht absperren kann. Es darf keine Undichtigkeit auftreten, weil etwa die Mitte des Verschlusselements 6, wenn dieses die Absperrposition einnimmt, eine Exzentrizität zur Mitte der Dichtungsfläche 10 aufweist. Um einen passenden Sitz des Absperrmoduls 11 in dem Anschlussbereich 13 der Auslaufschüssel 2 zu gewährleisten, sind die zu fügenden Bauteile mit der nötigen Maßgenauigkeit hergestellt und weisen Positionierungsflächen auf. Eine Positionierungsfläche 12b des Montagesockels 12 ist koaxial angeordnet zur Bewegungsachse des Verschlusselements 6. Eine Positionierungsfläche 13a des Anschlussbereichs 13 ist so gestaltet, dass sie die Positionierungsfläche 12b des Montagesockels 12 zentriert. Bei dieser Zentrierung kann eine Toleranz vorgesehen sein, die in der Absperrposition eine geringe Exzentrizität zwischen dem Mittelpunkt des Verschlusselements 6 und dem Mittelpunkt der Dichtungsfläche 10 erlaubt. Die Toleranz muss ausreichend klein sein, damit die Exzentrizität keine Luftundichtigkeit des Silobehälters zur Folge hat.

### Bezugszeichenliste

- 1: Auslaufsystem
- 2: Auslaufschüssel
- 3: Entleerungsöffnung
- 4: Absperrsystem
- 5: Auslauftopf
- 6: Verschlusselement
- 7: Hubeinrichtung
- 8: Pneumatikzylinder
- 8a: Kolbenstange
- 9: Trägereinrichtung
- 9a: Stütze
- 9b: Stütze
- 10: Dichtungsfläche
- 11: Absperrmodul
- 12: Montagesockel
- 12a: Aufnahmebereich
- 12b: Positionierungsfläche
- 13: Anschlussbereich
- 13a: Positionierungsfläche
- 14: Kopplungselemente
- 14a: Schalensegment
- 14b: Schalensegment
- 14c: Schraubverbindung
- 14d: Schraubverbindung
- 15: Dichtung
- 16: Abschirmungselement
- 16a: Bohrung
- 16b: Auflockerungsfläche
- 17: Öffnung
- 18: Öffnung
- 19: Öffnung
- 20: Anschlussflansch
- 21: Strömungskanal
- 22: Strömungskanal
- 23: Leitungsstück
- 24: Leitungsstück
- 25: Anschlusselement
- 26: Anschlusselement
- 27: Mantelelement
- S: Dichtung

## Patentansprüche

1. Absperrsystem (1) für die Entleerungsöffnung (3) einer Auslaufschüssel (2) eines Fahrzeugdrucksilos für rieselfähiges Schüttgut, umfassend ein Verschlusselement (6), eine Hubeinrichtung (7) zum Antrieb des Verschlusselements (6), eine Trägereinrichtung (9) für die Hubeinrichtung (7), und eine im montierten Zustand an der Peripherie der Entleerungsöffnung (3) vorgesehene Dichtungsfläche (10), wobei die Hubeinrichtung (7) im montierten Zustand innerhalb des Fahrzeugdrucksilos angeordnet ist und das Verschlusselement (6) durch eine Vorhubbewegung in eine Absperrposition und durch eine Rückhubbewegung in eine Durchflussposition bewegbar ist, und wobei dem Verschlusselement (6) eine Auflockerungsfläche (16b) zugeordnet ist, mit der während der Rückhubbewegung Schüttgut auflockerbar ist, **dadurch gekennzeichnet, dass** die Trägereinrichtung (9), die Hubeinrichtung (7) und das Verschlusselement (6) zu einem vorgefertigten Absperrmodul (11) zusammengebaut sind, dass das vorgefertigte Absperrmodul (11) einen Montagesockel (12) aufweist, dass der Montagesockel (12) mit einem Aufnahmebereich (12a) für ein Kopplungselement (14) versehen ist, und dass der Montagesockel (12) passend zu einem an der Peripherie der Entleerungsöffnung (3) vorgesehenen Anschlussbereich (13) der Auslaufschüssel (3) gestaltet ist.

2. Absperrsystem (4) nach Anspruch 1, **dadurch gekennzeichnet, dass** das Absperrmodul (11) die Dichtungsfläche (10) umfasst, die im montierten Zustand an der Peripherie der Entleerungsöffnung (3) vorgesehen ist.

3. Absperrsystem (4) nach Anspruch 1 oder 2, **dadurch gekennzeichnet, dass** die Hubeinrichtung (7) einen Fluidzylinder (8) aufweist, der von einem Arbeitsmedium betätigbar ist.

4. Absperrsystem (4) nach Anspruch 1 oder 2, **dadurch gekennzeichnet, dass** für die Hubeinrichtung (7) ein elektrischer Antrieb mit Motor und Getriebe vorgesehen ist.

5. Absperrsystem (4) nach einem der Ansprüche 1 bis 4, **dadurch gekennzeichnet, dass** wenigstens ein Energieleitung (21, 22, 23, 24) vorgesehen ist, mit der der Hubeinrichtung (7) Energie zuführbar ist, und dass die Energieleitung (21, 22, 23, 24) sich zumindest innerhalb der Trägereinrichtung (9) erstreckt.

6. Absperrsystem (4) nach Anspruch 5, **dadurch gekennzeichnet, dass** die Energieleitung (21, 22, 23, 24) ein außenliegend angeordnetes Anschlusselement (25, 26) für eine Versorgungsleitung aufweist.

7. Absperrsystem (4) nach einem der Ansprüche 1 bis 6, **dadurch gekennzeichnet, dass** ein Auslauftopf (5) vorgesehen ist.

8. Absperrsystem (4) nach Anspruch 7, **dadurch gekennzeichnet, dass** der Auslauftopf (5) einstückig mit der Trägereinrichtung (9) ausgebildet ist.

9. Absperrsystem (4) nach einem der Ansprüche 1 bis 8, **dadurch gekennzeichnet, dass** das Verschlusselement (6) mit einer Dichtung (15) versehen ist.

10. Absperrsystem (4) nach Anspruch 9, **dadurch gekennzeichnet, dass** zum Schutz der Dichtung (15) ein bewegliches Abschirmungselement (16) vorgesehen ist, mit dem die Dichtung (15) in geöffnetem Zustand des Verschlusselements (6) wenigstens teilweise gegen fließendes Schüttgut abschirmbar ist.

11. Auslaufsystem (1) für rieselfähiges Schüttgut, umfassend ein Absperrsystem (4) gemäß einem der Ansprüche 1 bis 10 sowie umfassend eine Auslaufschüssel (2) mit einer Entleerungsöffnung (3).

12. Auslaufsystem (1) nach Anspruch 11, **dadurch gekennzeichnet, dass** an der Peripherie der Entleerungsöffnung (3) ein Anschlussbereich (13) für das Absperrsystem (4) angeordnet ist.

13. Auslaufsystem nach Anspruch 11 oder 12, **dadurch gekennzeichnet, dass** die Auslaufschüssel (2) zur Befestigung an einem Silobehälter eines Fahrzeugdrucksilos einen Anschlussflansch (20) aufweist.

14. Auslaufsystem nach einem der Ansprüche 11 bis 13, **dadurch gekennzeichnet, dass** wenigstens ein Kopplungselement (14) vorgesehen ist, das zur lösbaren Verbindung des Absperrsystems (4) an der Auslaufschüssel (2) dient.

15. Auslaufsystem nach Anspruch 11 **dadurch gekennzeichnet, dass** das Kopplungselement (14) ein Mittel (14c, 14d) aufweist, mit dem in Umfangsrichtung eine Spannkraft erzeugbar ist.

## Claims

1. A shutoff system (1) for the emptying opening (3) of a discharge tray (2) of a vehicle pressure silo for pourable bulk material, including a closure element (6), a stroke device (7) for driving the closure element (6), a carrier device (9) for the stroke device (7), and a sealing surface (10) provided in the mounted condition at the periphery of the emptying opening (3), wherein the stroke device (7) in the mounted condition is arranged within the vehicle pressure silo and the closure element (6) is movable into a shutoff position by an advance stroke movement and into a through-flow position by a return stroke movement and wherein associated with the closure element (6) is a loosening surface (16b) with which bulk material can be loosened up during the return stroke movement, **characterised in that** the carrier device (9), the stroke device (7) and the closure element (6) are assembled to constitute a prefabricated shutoff module (11), the prefabricated shutoff module (11) has a mounting base (12), the mounting base (12) is provided with a receiving region (12a) for a coupling element (14), and the mounting base (12) is of a configuration matching a connecting region (13) of the discharge tray (3), which connecting region is provided at the periphery of the emptying opening (3).

2. A shutoff system (4) according to claim 1 **characterised in that** the shutoff module (11) has the sealing surface (10) which in the mounted condition is provided at the periphery of the emptying opening (3).

3. A shutoff system (4) according to claim 1 or claim 2 **characterised in that** the stroke device (7) has a fluid-operated cylinder (8) which is actuable by a working medium.

4. A shutoff system (4) according to claim 1 or claim 2 **characterised in that** there is provided an electric drive with a motor and a transmission.

5. A shutoff system (4) according to one of claims 1 to 4 **characterised in that** there is provided at least one energy line (21, 22, 23, 24) with which energy can be supplied to the stroke device (7) and the energy line (21, 22, 23, 24) extends at least within the carrier device (9).

6. A shutoff system (4) according to claim 5 **characterised in that** the energy line (21, 22, 23, 24) has a connecting element (25, 25), which is arranged in an outwardly disposed position, for a supply line.

7. A shutoff system (4) according to one of claims 1 to 6 **characterised in that** there is provided a discharge pot (5).

8. A shutoff system (4) according to claim 7 **characterised in that** the discharge pot (5) is formed integrally with the carrier device (19).

9. A shutoff system (4) according to one of claims 1 to 8 **characterised in that** the closure element (6) is provided with a seal (15).

10. A shutoff system (4) according to claim 9 **characterised in that** to protect the seal (15) there is provided a movable shielding element (16) with which the seal (15) can be at least partially shielded from flowing bulk material in the opened condition of the closure element (6).

11. A discharge system (1) for pourable bulk material including a shutoff system (4) according to one of claims 1 to 10 and including a discharge tray (2) having an emptying opening (3).

12. A discharge system (1) according to claim 11 **characterised in that** a connecting region (13) for the shutoff system (4) is arranged at the periphery of the emptying opening (3).

13. A discharge system according to claim 11 or claim 12 **characterised in that** the discharge tray (2) has a connecting flange (20) for fixing to a silo container of a vehicle pressure silo.

14. A discharge system according to one of claims 11 to 13 **characterised in that** there is provided at least one coupling element (14) which serves for releasably connecting the shutoff system (4) to the discharge tray (2).

15. A discharge system according to claim 11 **characterised in that** the coupling element (14) has a means (14c, 14d) with which a clamping force can be produced in the peripheral direction.

## Revendications

1. Système d'obturation (1) pour l'orifice de décharge (3) d'un bol de décharge (2) d'un silo à pression de véhicule destiné au produits en vrac coulants, comprenant un élément obturateur (6), un dispositif de levage (7) pour la commande de l'élément obturateur (6), un dispositif de support (9) pour le dispositif de levage (7), et une surface d'étanchéité (10) prévue, à l'état monté, à la périphérie de l'orifice de décharge (3), le dispositif de levage (7) étant, à l'état monté, arrangé dans le silo à pression de véhicule et l'élément obturateur (6) étant conçu pour être mu vers une position d'obturation lors d'une avant-course et vers une position d'écoulement lors d'une course de retour, et une surface d'ameublissement (16b) étant associée au dispositif obturateur (6) pour ameublir le produit en vrac pendent la course de retour, ***caractérisé* en ce que** le dispositif de support (9), le dispositif de levage (7) et l'élément obturateur (6) sont assemblés en un module obturateur préfabriqué (11), que le module obturateur préfabriqué (11) comporte un pied de montage (12) avec une zone de réception (12a) d'un élément d'accouplement (14), et **en ce que** le pied de montage (12) est formé de cette façon qu'il convient à une zone de raccordement (13) du bol de décharge prévu à la périphérie de l'orifice de décharge (3).

2. Système d'obturation (4) selon la revendication 1, **caractérisé en ce que** le module obturateur (11) comprend la surface d'étanchéité (10) qui est, à l'état monté, prévue à la périphérie de l'orifice de décharge (3).

3. Système d'obturation (4) selon les revendications 1 ou 2, **caractérisé en ce que** le dispositif de levage (7) comporte un cylindre fluidique (8) qui peut être commandé par un fluide moteur.

4. Système d'obturation (4) selon les revendications 1 ou 2, **caractérisé en ce qu'**un dispositif de commande électrique avec un moteur et une transmission est prévu pour le dispositif de levage (7).

5. Système d'obturation (4) selon l'une des revendications 1 à 4, **caractérisé en ce qu'**il est prévu au moins un conduit d'énergie (21, 22, 23, 24) par lequel le dispositif de levage (7) peut être alimenté en l'énergie, et **en ce que** le conduit d'énergie (21, 22, 23, 24) s'étend au moins dans le dispositif de support (9).

6. Système d'obturation (4) selon la revendication 5, **caractérisé en ce que** le conduit d'énergie (21, 22, 23, 24) comporte un élément de raccordement (25, 26) disposé à l'extérieur, pour un conduit d'alimentation.

7. Système d'obturation (4) selon l'une des revendications 1 à 6, **caractérisé en ce qu'**il est prévu un pot de décharge (5).

8. Système d'obturation (4) selon la revendication (7), **caractérisé en ce que** le pot de décharge (5) est formé en une pièce avec le dispositif de support (9).

9. Système d'obturation (4) selon l'une des revendications 1 à 8, **caractérisé en ce que** l'élément obturateur (6) est muni d'un joint d'étanchéité (15).

10. Système d'obturation (4) selon la revendication 9, **caractérisé en ce que** pour la protection du joint d'étanchéité (15) il est prévu un élément d'écran mobile (16) par lequel le joint d'étanchéité (15) peut, à l'état ouvert de l'élément obturateur (6), être protégé contre le produit en vrac coulant, au moins en partie.

11. Système de décharge (1) pour le vrac coulant, comprenant un système d'obturation (4) selon l'une des revendications 1 à 10 ainsi qu'un pot de décharge (2) comportant un orifice de décharge (3).

12. Système de décharge (1) selon la revendication 11, **caractérisé en ce qu'**à la périphérie de l'orifice de décharge (3) il est prévu une zone de raccordement (13) pour le système d'obturation (4).

13. Système de décharge selon les revendications 11 ou 12, **caractérisé en ce que** ledit pot de décharge (2) comporte une bride de raccordement (20) pour la fixation d'un silo à pression de véhicule au réservoir silo.

14. Système de décharge selon l'une des revendications 11 à 13, **caractérisé en ce qu'**il est prévu au moins un élément d'accouplement (14) qui sert de relier de manière amovible ledit système d'obturation au pot de décharge (2).

15. Système de décharge selon la revendication 11, **caractérisé en ce que** l'élément d'accouplement (14) comporte un moyen (14c, 14d) par lequel peut être produite une élasticité en la direction circonférentielle.
